# EUROPEAN PATENT APPLICATION

(11) **EP 3 636 959 A1**
(43) Date of publication of application: **15.04.2020**
(21) Application number: 19200697.1
(22) Date of filing: 01.10.2019
(51) Int. Cl.: F16H 3/089

(54) **VEHICLE TRANSMISSION, POWERTRAIN, AND VEHICLE**

(30) Priority: 09.10.2018 JP 2018190672
(71) Applicant: Mazda Motor Corporation, Aki-gun, Hiroshima 730-8670 (JP)
(72) Inventor: ISHII, Mamoru, Fuchu-cho, Aki-gun,, Hiroshima 730-8670 (JP)
(74) Representative: Müller-Boré & Partner Patentanwälte PartG mbB

(57) **Abstract**

A transmission 1 includes: an input shaft 10 connected to a driving source 2; an output shaft 20 parallel with the input shaft 10; and a reverse idle shaft 30 parallel with both of the shafts 10 and 20, a plurality of gear trains G1 to G6 for forward gears and a gear train GR for reverse gear are included between the input shaft 10 and the output shaft 20, the gear train GR for reverse gear includes a first reverse idle gear 31 that meshes with a reverse input gear 17 on the reverse idle shaft 30, and a second reverse idle gear 32 that meshes with a reverse output gear 27 on the reverse idle shaft 30, a connection/disconnection mechanism 70 is provided between the reverse idle gears 31 and 32, the reverse input gear 17 on the input shaft 10 is disposed so as to be adjacent to a side, which is opposite to the driving source 2, of an input gear 11 for first gear, and the reverse output gear 27 on the output shaft 20 is disposed so as to be adjacent to a side, which is opposite to the driving source 2, of an output gear 22 for second gear.

## Description

### [Technical Field]

The present invention relates to a vehicle transmission for an automobile and the like, a powertrain including the transmission, and a vehicle including the powertrain.

### [Background Art]

In general, a manual transmission used in a vehicle such as an automobile includes an input shaft coupled to a driving source such as an engine via a clutch, an output shaft disposed in parallel with the input shaft and coupled to driving wheels via a differential gear, and a plurality of gear trains for forward gears provided between those two shafts. In a so-called transversely mounted type manual transmission, a final drive gear that is fixedly provided on the output shaft and transmits power to the differential gear is usually provided.

As the gear train for forward gear in this type of transmission, a constant-mesh-type gear train is normally employed. The constant-mesh-type gear train is formed by an input gear provided on the input shaft, and an output gear that is provided on the output shaft and constantly meshes with the input gear. One among the input gear and the output gear is a fixed gear that is fixed to the shaft, and the other gear is a loosely fitted gear that is loosely fitted on the shaft. When it is shifted to a certain gear while the vehicle is traveling, the rotation of the loosely fitted gear in the gear train of the shift stage is fixed to the shaft via a synchronizer, thereby smoothly realizing a power transmission state in the gear train.

In the manual transmission, a gear train for reverse gear is also provided. As the gear train for reverse gear, a selective-slide-type gear train is sometimes employed. The selective-slide-type gear train for reverse gear is formed by a reverse input gear fixedly provided on an input shaft, a reverse output gear fixedly provided on an output shaft, and a reverse idle gear loosely fitted on a reverse idle shaft parallel to the input shaft and the output shaft. When the speed change operation to the reverse gear is performed, the reverse idle gear slides and meshes with the reverse input gear and the reverse output gear, and the gear train for reverse gear is placed in a power transmission state.

Meanwhile, also in the gear train for reverse gear, a constant-mesh-type gear train and a synchronizer for reverse gear that corresponds thereto may be provided in order to realize further facilitation of the power transmission state of the gear train as with the gear train for forward gears. Patent Document 1 discloses an example of a manual transmission of the type above.

Now, the configuration of Patent Document 1 is specifically described with reference to FIG. 3.

A plurality of gear trains G501 to G506 for forward gears of a transmission 500 in Patent Document 1 are disposed in the order from the first gear to the sixth gear from the side of a driving source 502, and a final drive gear 528 is fixedly provided on the side further closer to the driving source 502 than the gear train G501 for first gear on an output shaft 520. Input gears 511 and 512 for the first gear and the second gear are fixedly provided on an input shaft 510, output gears 523 to 526 for the third gear to the sixth gear are fixedly provided on the output shaft 520, output gears 521 and 522 for the first gear and the second gear are loosely fitted on the output shaft 520, input gears 513 to 516 for the third gear to the sixth gear are loosely fitted on the input shaft 510, a synchronizer 540 for first gear and second gear is provided on the output shaft 520, and synchronizers 550 and 560 for third gear and fourth gear and fifth gear and sixth gear are provided on the input shaft 510.

Meanwhile, in a gear train GR500 for reverse gear, a reverse input gear 517 integrally provided with the input gear 511 for first gear on the input shaft 510, a first reverse idle gear 531 that is loosely fitted on a reverse idle shaft 530 and constantly meshes with the reverse input gear 517, a second reverse idle gear 532 loosely fitted on the reverse idle shaft 530 in the same manner, and a reverse output gear 527 that is formed on a synchro sleeve 541 of the synchronizer 540 for first gear and second gear on the output shaft 520 and constantly meshes with the second reverse idle gear 532 are included. A synchronizer 570 for reverse gear for synchronizing the rotation of the first reverse idle gear 531 and the second reverse idle gear 532 is disposed between both of the idle gears 531 and 532 on the reverse idle shaft 530 as a connection/disconnection mechanism that connects and disconnects both of the idle gears 531 and 532 to and from each other.

When the synchronizer 570 for reverse gear is operated, the first reverse idle gear 531 and the second reverse idle gear 532 are integrally rotated. As a result, the power input into the input shaft 510 is transmitted to the reverse output gear 527 on the output shaft 520 from the reverse input gear 517 on the input shaft 510 via the first and second reverse idle gears 531 and 532. The power transmitted to the reverse output gear 527 as above is output to a differential gear 506 from the final drive gear 528 on the output shaft 520 that constantly rotates together with the reverse output gear 527.

### [Prior Art Document]

### [Patent Document]

[Patent Document] Patent Application Publication No. 2005-0003078

### [Summary of Invention]

### [Problem to be Solved by the Invention]

Meanwhile, the number of gear stages is increasing in the manual transmission in the recent years in order to improve the drive feeling and the like. As a result, the number of gears and synchronizers disposed on the input shaft and the output shaft increases, and hence the size of the transmission in the axial direction tends to increase.

In a so-called hybrid vehicle that is a type in which a motor is disposed between an input shaft of a transmission and an output shaft of a driving source, for example, the full length of a powertrain in the axial direction tends to be long. The tendency becomes disadvantageous when the powertrain is disposed in a limited space in the vehicle width direction in a case where the engine and the transmission are transversely placed as can often be seen in so-called FF (front-engine front-drive) vehicles.

Therefore, in the development of the manual transmission, it is important to consider the arrangement of the components of the gear trains while shortening the size in the axial direction.

In the structure of the transmission 500 in Patent Document 1, as illustrated in FIG. 4, the input shaft 510, the output shaft 520, and the reverse idle shaft 530 are disposed so as to be close to each other in order to downsize the size of the transmission 500 in the radial direction when seen from the axial direction. The first reverse idle gear 531 and the output gear 521 for first gear with larger diameters than the input gear 511 for first gear meshes with the input gear 511 for first gear. The input gear 511 for first gear has a relatively small diameter and is used also as the reverse input gear 517. Therefore, if the first reverse idle gear 531 and the output gear 521 for first gear are disposed in the same position in the axial direction, both of the gears 531 and 521 easily interfere with each other.

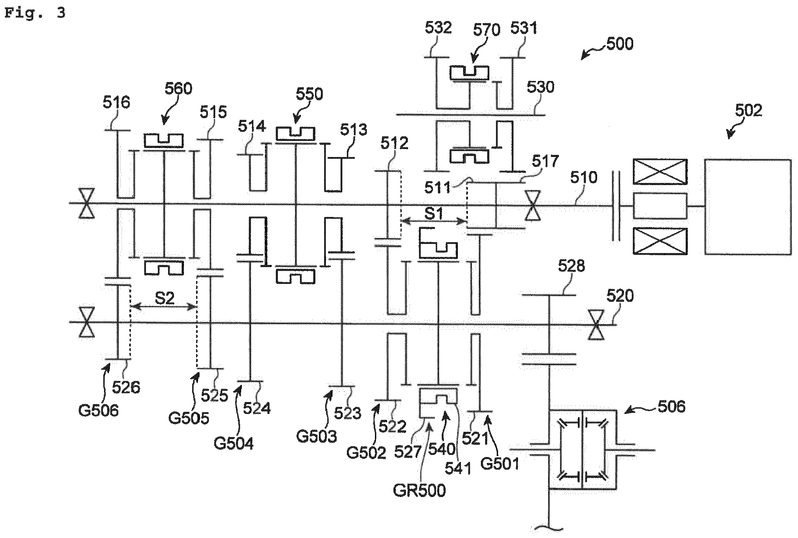

Thus, in the configuration in Patent Document 1, the first reverse idle gear 531 is disposed so as to be offset closer to the driving source 502 side in the axial direction than the output gear 521 for first gear (see FIG. 3). As a result, the interference between both of the gears 531 and 521 is avoided.

However, the reverse input gear 517 also needs to be disposed so as to project closer to the driving source 502 in the axial direction than the gear train G501 for first gear in accordance with the arrangement of the first reverse idle gear 531 as above. Therefore, an interval between the gear train G501 for first gear and the driving source 502 on the input shaft 510 needs to be secured to be wider by the amount the reverse input gear 517 is projecting. As a result, the increase in the shaft length of the input shaft 510 and the upsizing of the transmission 500 in the axial direction are easily caused.

Thus, an object of the present invention is to downsize a vehicle transmission in the axial direction by newly constructing the arrangement of components of gear trains.

### [Means to Solve the Problem]

One aspect of the invention is a vehicle transmission including: an input shaft into which a driving force from a driving source is input; an output shaft disposed in parallel with the input shaft; a plurality of gear trains (G1 to G6; G201 to G206) for forward gears provided between the input shaft and the output shaft; a reverse idle shaft disposed in parallel with the input shaft and the output shaft; and a reverse gear train for reverse gear provided so as to span across the input shaft, the output shaft, and the reverse idle shaft. The plurality of gear trains includes a gear train for first gear and a gear train for second gear. The gear train for first gear includes an input gear for first gear fixed to the input shaft, and an output gear for first gear that is rotatably fitted on the output shaft so as to mesh with the input gear for first gear. The gear train for second gear includes an input gear for second gear fixed to the input shaft, and an output gear for second gear that is rotatably fitted on the output shaft so as to mesh with the input gear for second gear. A synchronizer for first gear and second gear configured to selectively fix either one of the output gear for first gear and the output gear for second gear to the output shaft is provided between the output gear for first gear and the output gear for second gear on the output shaft. The reverse gear train includes: a reverse input gear provided on the input shaft; a first reverse idle gear that is rotatably fitted on the reverse idle shaft and configured to mesh with the reverse input gear; a second reverse idle gear rotatably fitted on the reverse idle shaft and disposed so as to be separated from the first reverse idle gear with a predetermined gap in a axial direction; and a reverse output gear that is provided on the output shaft and configured to mesh with the second reverse idle gear. A connection/disconnection mechanism configured to form and/or release connection between the first reverse idle gear and the second reverse idle gear is provided in the predetermined gap on the reverse idle shaft. An input gear closer to a driving source among the input gear for first gear and the input gear for second gear on the input shaft is disposed between the reverse input gear and the driving source and adjacent to the reverse input gear. An output gear positioned farther from the driving source among the output gear for first gear and the output gear for second gear on the output shaft is disposed between the reverse output gear and the driving source and adjacent to the reverse output gear.

Particularly, the connection/disconnection mechanism is a synchronizer configured to synchronize rotation of the first reverse idle gear and rotation of the second reverse idle gear.

Further particularly, the input shaft and the output shaft extend in a vehicle body width direction.

Further particularly, the output shaft includes a final drive gear configured to transmit power to a differential gear connected to a driving wheel. A predetermined gear train that is different from the gear train for first gear and the gear train for second gear among the plurality of gear trains includes a fixed gear that is fixed to the output shaft, and a fitted gear that is rotatably fitted on the input shaft. The fitted gear of the predetermined gear train is provided on the input shaft in a fixable manner via a predetermined synchronizer provided so as to be adjacent to the fitted gear on the input shaft. The fixed gear of the predetermined gear train is disposed in a position adjacent to the final drive gear on the output shaft. The final drive gear is disposed in a region in the axial direction that overlaps with the predetermined synchronizer for the predetermined gear train.

Further particularly, the second reverse idle gear and the reverse output gear are formed by a set of helical gears configured to mesh with each other.

Further particularly, the reverse gear train is disposed between the gear train for first gear and a gear train other than the gear train for second gear in the axial direction.

Further particularly, the reverse gear train is disposed between the gear train for first gear and a gear train for third gear in the axial direction.

Further particularly, the reverse gear train is disposed between the gear train for first gear and a gear train for fourth gear in the axial direction.

Further particularly, the reverse gear train is disposed so as to overlap with the gear train for second gear in the axial direction.
Further particularly, the reverse output gear is apart from and the synchronizer for first gear and second gear in the axial direction.

Further particularly, the vehicle transmission is a six-speed transmission.

Further particularly, the vehicle transmission is a manual transmission.

Further particularly, a powertrain includes the above vehicle transmission, and the driving source including an engine and a motor disposed on a same axis line as the input shaft.

Further particularly, the powertrain further includes a differential gear.

Further particularly, a vehicle includes the above powertrain and a driving wheel.

One aspect of the invention of clause 1 is a vehicle transmission having: an input shaft into which a driving force from a driving source is input; an output shaft disposed in parallel with the input shaft; a plurality of gear trains for forward gears provided between the input shaft and the output shaft; a reverse idle shaft disposed in parallel with the input shaft and the output shaft; and a gear train for reverse gear provided so as to span across the input shaft, the output shaft, and the reverse idle shaft. The vehicle transmission is characterized, the plurality of gear trains for forward gears includes a gear train for first gear and a gear train for second gear, the gear train for first gear includes an input gear for first gear fixed to the input shaft, and an output gear for first gear that is loosely fitted on the output shaft so as to mesh with the input gear for first gear, the gear train for second gear includes an input gear for second gear fixed to the input shaft, and an output gear for second gear that is loosely fitted on the output shaft so as to mesh with the input gear for second gear, a synchronizer for first gear and second gear that selectively fixes either one of the output gear for first gear and the output gear for second gear to the output shaft is provided between the output gear for first gear and the output gear for second gear on the output shaft, the gear train for reverse gear includes: a reverse input gear provided on the input shaft; a first reverse idle gear that is loosely fitted on the reverse idle shaft and meshes with the reverse input gear; a second reverse idle gear loosely fitted on the reverse idle shaft and disposed so as to be separated from the first reverse idle gear with a predetermined gap in the axial direction; and a reverse output gear that is provided on the output shaft and meshes with the second reverse idle gear, a connection/disconnection mechanism that forms and releases connection between the first reverse idle gear and the second reverse idle gear is provided in the predetermined gap on the reverse idle shaft, the reverse input gear is disposed adjacent to a side, which is opposite to the driving source, of a driving-source-side input gear positioned on a driving source side among the input gear for first gear and the input gear for second gear on the input shaft, and the reverse output gear is disposed so as to be adjacent to a side, which is opposite to the driving source, of a non-driving-source-side output gear positioned on the side opposite to the driving source among the output gear for first gear and the output gear for second gear on the output shaft.

Further, an invention of clause 2 is characterized, in the invention described in the clause 1, the connection/disconnection mechanism is a synchronizer that synchronizes rotation of the first reverse idle gear and rotation of the second reverse idle gear.

Further, an invention of clause 3 is characterized, in the invention described in the invention described in the clause 1 or the clause 2, the input shaft and the output shaft extend in a vehicle width direction.

Further, an invention of clause 4 is characterized, in the invention described in any one of the clause 1 through the clause 3, the output shaft includes a final drive gear that transmits power to a differential gear connected to a driving wheel, a predetermined gear train that is different from the gear train for first gear and the gear train for second gear among the plurality of gear trains for forward gears includes a fixed gear that is fixed to the output shaft, and a loosely fitted gear that is loosely fitted on the input shaft, the loosely fitted gear of the predetermined gear train is provided on the input shaft in a fixable manner via a predetermined synchronizer provided so as to be adjacent to the loosely fitted gear on the input shaft, the fixed gear of the predetermined gear train is disposed in a position adjacent to the final drive gear on the output shaft, and the final drive gear is disposed in a region in the axial direction that overlaps with the predetermined synchronizer that corresponds to the predetermined gear train.

Further, an invention of clause 5 is characterized, in the invention described in any one of the clauses 1 through 4, the second reverse idle gear and the reverse output gear are formed by a set of helical gears that mesh with each other.

Further, an invention of clause 6 is characterized is a powertrain having the vehicle transmission described in any one of the clause 1 through the clause 5 and the driving source. In the powertrain, the driving source includes an engine and a motor disposed on the same axis line as the input shaft.

### [Effect of the Invention]

According to the invention described in clause 1, the reverse input gear is disposed so as to be adjacent to the side, which is opposite to the driving source, of the driving-source-side input gear positioned on the driving source side among the input gear for first gear and the input gear for second gear. Therefore, unlike the prior art of Patent Document 1 described above, there is no need to secure a space on the input shaft for disposing the reverse input gear on the driving source side with respect to the driving-source-side input gear. Therefore, as compared to the prior art of Patent Document 1, the part of the input shaft on the driving source side can be shortened so as to reduce the interval between the driving-source-side input gear and the driving source in the axial direction.

Also, as illustrated in FIG. 3, in the prior-art structure of Patent Document 1, a synchro sleeve 541 of a synchronizer 540 for first gear and second gear and a reverse output gear 527 are integrated, and hence the synchronizer 540 is upsized in the axial direction. Meanwhile, the reverse output gear in the present invention is provided so as to be independent of the synchronizer for first gear and second gear and on the side opposite to the driving source than the non-driving-source-side output gear on the output shaft, and hence the synchronizer can be formed in a compact manner in the axial direction. Therefore, the non-driving-source-side output gear and the input gear that meshes therewith can be disposed closer to the driving-source-side input gear in the axial direction. Therefore, on the input shaft, the interval between the input gear for first gear and the input gear for second gear in the axial direction can be shortened.

Further, in the prior art structure in Patent Document 1, the synchro sleeve 541 and the reverse output gear 527 are integrated, and hence a wide dead space S1 in which a gear, a synchronizer, and the like are not disposed is formed in a range in which the reverse output gear 527 slides in the axial direction between the input gear 511 for first gear and the input gear 512 for second gear on the input shaft 510.

Compared to this, the reverse output gear in the present invention is provided so as to be independent of the synchronizer for first gear and second gear, and does not move in the axial direction. Therefore, as described above, the reverse input gear can be disposed in a region on the input shaft in the axial direction that overlaps with the synchronizer for first gear and second gear on the output shaft without interfering with the reverse output gear. As described above, the reverse input gear is disposed with use of the dead space on the input shaft. Therefore, the extension of the input shaft to the side opposite to the driving source is suppressed although the reverse input gear is disposed closer to the side opposite to the driving source as compared to the prior art of Patent Document 1. Therefore, the entire input shaft can be effectively shortened.

As described above, according to the present invention, by constructing a completely new layout that is different from the prior art, the input shaft can be effectively shortened, and the components of the gear train for first gear, the gear train for second gear, and the gear train for reverse gear can be disposed in a compact manner in the axial direction as a whole without interfering with each other. Thus, the vehicle transmission can be formed in a compact manner in the axial direction as a whole. As a result, the ease of mounting the transmission onto a vehicle can be effectively increased.

According to the invention described in clause 2, by using the synchronizer as the connection/disconnection mechanism of the gear train for reverse gear, the gear ringing is also suppressed in the gear train for reverse gear, and smooth shifting into reverse can be realized.

According to the invention described in clause 3, the transmission is a so-called transverse transmission in which the input shaft and the output shaft are disposed so as to extend in the vehicle body width direction, and hence the downsizing in the axial direction described above can be realized under conditions in which the full length of the transmission in the axial direction is required to be shortened. Therefore, in the space in the engine compartment that is limited in the vehicle body width direction, the ease of mounting the vehicle transmission can be improved.

According to the invention described in clause 4, in the predetermined gear train disposed so as to be adjacent to the final drive gear, the fixed gear is disposed on the output shaft, and the loosely fitted gear and the predetermined synchronizer that corresponds thereto are disposed on the input shaft. The inventors of the present application have focused on the feature in which none of the gears of the gear trains exists and an empty space is formed on the output shaft in the region in the axial direction in which the predetermined synchronizer is disposed, and have obtained a completely new idea of disposing the final drive gear in the empty space on the output shaft.

Thereby, the final drive gear is disposed by effectively using the dead space formed on the output shaft, and hence the size of the output shaft in the axial direction can be shortened as compared to a case where the final drive gear is disposed in a position shifted from the gear train and the synchronizer in the axial direction as in the prior art. As a result, the shaft length of the output shaft of the transmission can be shortened without causing the structure of the transmission to become complicated, and hence the layout efficiency of the transmission can be further improved. Therefore, the length of the output shaft in the axial direction can be shortened in addition to the shortening of the length of the input shaft in the axial direction according to the first aspect, and hence the size of the transmission in the axial direction can be effectively shortened. As a result, the layout property of the transmission is improved more.

According to the invention described in clause 5, the reverse output gear is provided so as to be independent of the synchronizer for first gear and second gear. Meanwhile, as illustrated in FIG. 3, for example, in a transmission 500 in Patent Document 1, the reverse output gear 527 is slidable in the axial direction together with a synchro sleeve 541 of a synchronizer 540 for first gear and second gear. Therefore, if both gears 532 and 527 are formed by helical gears, there is a fear that thrust force is applied to the reverse output gear, thereby causing the synchro sleeve 541 to slide in the axial direction and causing shift-in at a timing other than speed change to the first gear or the second gear. Thus, both of the gears need to be formed by spur gears.

Compared to this, in the present invention, even when the reverse output gear independent of the synchronizer, and the second reverse idle gear that meshes therewith are formed by helical gears, unintended shifting into the first gear or the second gear as above can be prevented. As a result, smooth meshing between the helical gears is realized, and hence the noise performance can be improved as compared to the structure in Patent Document 1 described above.

According to the invention described in clause 6, in a powertrain of a so-called hybrid vehicle including an engine and a motor in the driving source, the ease of mounting the engine, the motor, and the transmission can be improved under a stricter condition regarding the layout property.

### [Brief Description of the Drawings]

[FIG. 1] Skeleton diagram of a vehicle transmission according to Embodiment 1 of the present invention;
[FIG. 2] Skeleton diagram of a vehicle transmission according to Embodiment 2 of the present invention;
[FIG. 3] Skeleton diagram of a manual transmission according to an example of the prior art; and
[FIG. 4] Schematic view of the positional relationship between shafts of the manual transmission of the prior-art example in an in-vehicle state.

### [Embodiments of the Invention]

The configuration of a vehicle transmission according to the present invention is described below for each embodiment.

### [Embodiment 1]

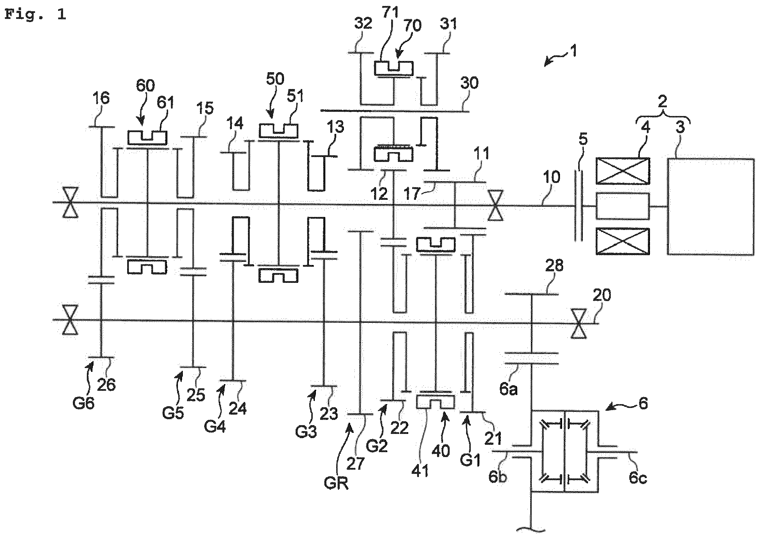

FIG. 1 is a skeleton diagram of the vehicle transmission according to Embodiment 1 of the present invention. A transmission 1 according to Embodiment 1 is particularly a so-called transversely mounted type of manual transmission, and is configured to particularly achieve six forward speeds and one reverse speed. The vehicle transmission may be modified to be capable of automatically performing shift change by an actuator.

The transmission 1 forms a powertrain together with a driving source 2. In this embodiment, the driving source 2 is formed by an engine 3 and a motor 4 such as an electric motor. As a result, a powertrain of a so-called hybrid vehicle is formed. An output shaft of the engine 3 and an output shaft of the motor 4 are particularly disposed on the same axis line extending in the vehicle body width direction, and are directly coupled to each other. The output shaft of the engine 3 and the output shaft of the motor 4 may be in parallel with each other.

The transmission 1 particularly includes one or more, particularly a single input shaft 10 into which the rotation driving force or the torque from the driving source 2 is input via one or more, particularly a single clutch apparatus 5, and a single output shaft 20 and a reverse idle shaft 30 disposed in parallel with the input shaft 10. The input shaft 10 is particularly disposed on the same axis line as the output shaft of the engine 3 and the output shaft of the motor 4, and is coupled to the output shaft of the motor 4 via the clutch apparatus 5 in a dis-connectable manner. The input shaft 10 and the output shaft 20 are rotatably supported by a transmission case (not shown) via a bearing member. The reverse idle shaft 30 is fixed to the transmission case.

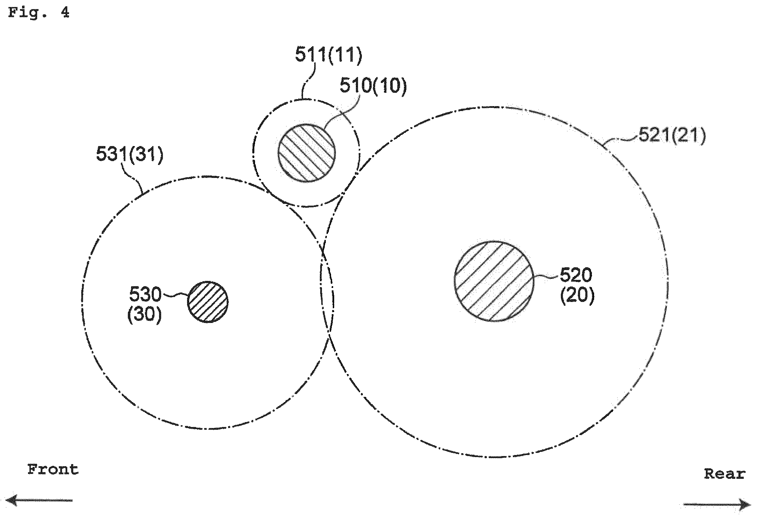

As with the prior art of Patent Document 1 illustrated in FIG. 4, the output shaft 20 is particularly disposed behind and below the input shaft 10, and the reverse idle shaft 30 is particularly disposed ahead and below the input shaft 10. The output shaft 20 is disposed in basically the same height as or above the reverse idle shaft 30 in vehicle up-down direction.

As illustrated in FIG. 1, the output shaft 20 is particularly coupled to driving wheels (not shown) via a differential gear 6. Specifically, a final drive gear 28 is provided on the output shaft 20, and the final drive gear 28 meshes with a final driven gear 6a of the differential gear 6. As a result, the rotation of the output shaft 20 is transmitted to left and right axles 6b and 6c via the differential gear 6, and is further transmitted to the driving wheels coupled to the axles 6b and 6c.

A gear train G1 for first gear, a gear train G2 for second gear, a gear train GR for reverse gear, a gear train G3 for third gear, a gear train G4 for fourth gear, a gear train G5 for fifth gear, and a gear train G6 for sixth gear are particularly disposed between the input shaft 10 and the output shaft 20 in the transmission 1 in the stated order from the driving source 2 side.

The gear train G1 for first gear and the gear train G2 for second gear are particularly formed by driving-side input gears (fixed gears) 11 and 12 for first gear and second gear fixedly or unrotatably provided on the input shaft 10, and driven-side output gears (loosely fitted gears) 21 and 22 for first gear and second gear loosely or rotatably fitted on the output shaft 20. In other words, the driving-side input gears (fixed gears) 11 and 12 are not rotatable with respect to the input shaft 10, and the driven-side output gears (loosely fitted gears) 21 and 22 are rotatable with respect to the output shaft 20. The gear trains G3 to G6 for the third gear to the sixth gear are formed by driving-side input gears (loosely fitted gears) 13, 14, 15, and 16 for third gear to sixth gear loosely or rotatably fitted on the input shaft 10, and driven-side output gears (fixed gears) 23, 24, 25, and 26 for third gear to sixth gear fixedly provided on the output shaft 20. In other words, the driving-side input gears (loosely fitted gears) 13, 14, 15, and 16 are rotatable with respect to the input shaft 10, and the driven-side output gears (fixed gears) 23, 24, 25, and 26 are not rotatable with respect to the output shaft 20. The configuration of the gear train GR for reverse gear is described below.

A synchronizer 40 for first gear and second gear that fixes the output gear (loosely fitted gear) 21 for first gear and the output gear (loosely fitted gear) 22 for second gear to the output shaft 20 is disposed between the output gear (loosely fitted gear) 21 for first gear and the output gear (the loosely fitted gear) 22 for second gear on the output shaft 20. A synchronizer 50 for third gear and fourth gear that fixes the input gear (loosely fitted gear) 13 for third gear and the input gear (loosely fitted gear) 14 for fourth gear to the input shaft 10 is disposed between the input gear (loosely fitted gear) 13 for third gear and the input gear (loosely fitted gear) 14 for fourth gear on the input shaft 10. A synchronizer 60 for fifth gear and sixth gear that fixes the input gear (loosely fitted gear) 15 for fifth gear and the input gear (loosely fitted gear) 16 for sixth gear to the input shaft 10 is disposed between the input gear (loosely fitted gear) 15 for fifth gear and the input gear (loosely fitted gear) 16 for sixth gear on the input shaft 10 as well.

The gear train GR for reverse gear is formed by a reverse input gear 17 fixedly provided on the input shaft 10, a first reverse idle gear 31 that is loosely or rotatably fitted on the reverse idle shaft 30 and constantly meshes with the reverse input gear 17, a second reverse idle gear 32 loosely or rotatably fitted on the reverse idle shaft 30, and a reverse output gear 27 that is fixedly provided on the output shaft 20 and constantly meshes with the second reverse idle gear 32.

The reverse input gear 17 is particularly provided integrally with the input gear 11 for first gear, and is used both for the gear train G1 for first gear and the gear train GR for reverse gear. The input gear 11 for first gear and the reverse input gear 17 are particularly disposed in positions offset from each other in the axial direction. Specifically, the reverse input gear 17 is disposed so as to be adjacent to the input gear 11 for first gear on the side opposite to the driving source 2 of the input gear 11 for first gear. The input gear 11 for first gear and the reverse input gear 17 have substantially the same diameter.

Now, the reason of offsetting the input gear 11 for first gear and the reverse input gear 17 from each other in the axial direction is described.

As with the prior-art structure (see FIG. 3 and FIG. 4) of Patent Document 1, the first reverse idle gear 31 and the output gear 21 for first gear with larger diameters than the input gear 11 (reverse input gear 17) for first gear meshes with the input gear 11 (reverse input gear 17) for first gear. As illustrated in FIG. 4, the first reverse idle gear 31 and the output gear 21 for first gear are disposed so as to overlap with each other when seen from the axial direction. Therefore, if the first reverse idle gear 31 and the output gear 21 for first gear are disposed in the same position in the axial direction, both of the gears 21 and 31 interfere with each other. Thus, in this embodiment, the first reverse idle gear 31 is disposed so as to be offset from the output gear 21 for first gear to the side opposite to the driving source 2 in the axial direction (see FIG. 1). As a result, the interference between both of the gears 21 and 31 is avoided. Accordingly, the reverse input gear 17 is disposed so as to be offset to the side opposite to the driving source 2 in the axial direction with respect to the input gear 11 for first gear.

The reverse output gear 27 is disposed so as to be independent of the synchronizer 40 for first gear and second gear and adjacent to a side, which is opposite to the driving source 2, of the output gear 22 for second gear on the output shaft 20. Accordingly, the second reverse idle gear 32 that meshes with the reverse output gear 27 is disposed closer to the side opposite to the driving source 2 than the input gear 12 for second gear.

In other words, by disposing the second reverse idle gear 32 on the side opposite to the driving source 2, the entirety of the gears 31 and 32 and the synchronizer 70 for reverse gear on the reverse idle shaft 30 is disposed so as to be offset to the side opposite to the driving source 2 in the axial direction as compared to the prior-art structure illustrated in FIG. 3. As a result, the first reverse idle gear 31 is disposed on the side opposite to the driving source 2 in the axial direction with respect to the output gear 21 for first gear.

As illustrated in FIG. 1, on the reverse idle shaft 30, a predetermined gap is provided in the axial direction between the first reverse idle gear 31 and the second reverse idle gear 32, and a synchronizer 70 for reverse gear is disposed in the predetermined gap for coupling the first reverse idle gear 31 and the second reverse idle gear 32 to each other.

Next, the operation of the transmission 1 formed as above is described.

When a shifting operation to a forward gear is performed by a gear stick or a shift lever (not shown), only one synchronizer that corresponds to the shift stage of the gear to which the shifting operation has been performed is operated among the abovementioned synchronizeres 40, 50, and 60. As a result, among the abovementioned gear trains G1 to G6 for forward gears, only the gear train of the shift stage to which the shifting operation has been performed is selectively placed in a power transmission state between the input shaft 10 and the output shaft 20.

For example, when the shifting operation to the first gear or the second gear is performed by the gear stick, the synchro sleeve 41 of the synchronizer 40 for first gear and second gear slides to the side of the gear train G1 for first gear or the side of the gear train G2 for second gear on the output shaft 20 in conjunction with the operation. Then, the loosely fitted gear 21 or 22 on the side to which sliding has been performed is fixed to the output shaft 20, and the gear train of the shift stage to which the shifting operation has been performed is placed in a power transmission state. Similarly, when the shifting operation is performed to any of the third gear to the sixth gear by the gear stick, a synchro sleeve 51 of the synchronizer 50 for third gear and fourth gear or a synchro sleeve 61 of the synchronizer 60 for fifth gear and sixth gear slides on the input shaft 10 in conjunction with the operation. Then, the loosely fitted gear 13, 14, 15, or 16 on the side to which the sliding has been performed is fixed to the input shaft 10, and the gear train of the shift stage to which the shifting operation has been performed is placed in a power transmission state.

Meanwhile, when the shifting operation of the gear stick to the reverse position is performed, in conjunction with the operation, a synchro sleeve 71 of the synchronizer 70 for reverse gear slides to the driving source 2 side in the axial direction, and the first reverse idle gear 31 and the second reverse idle gear 32 are coupled so as to integrally rotate. As a result, when the gear train GR for reverse gear is placed in a power transmission state, the rotation of the input shaft 10 is transmitted to the first reverse idle gear 31 via the reverse input gear 17, and the rotation of the first reverse idle gear 31 is transmitted to the second reverse idle gear 32 via the synchronizer 70 for reverse gear. The rotation transmitted to the second reverse idle gear 32 is transmitted to the reverse output gear 27 that meshes with the second reverse idle gear 32, and is further transmitted to the driving wheels from the final drive gear 28 on the output shaft 20 via the differential gear 6.

Advantageous effects of Embodiment 1 are described below. As described above, the reverse input gear 17 is disposed so as to be adjacent to the side, which is opposite to the driving source 2, of the input gear 11 for first gear. Therefore, in the arrangement of the reverse input gear 17, the space between the input gear 11 for first gear and the input gear 12 for second gear can be effectively used. Therefore, as compared to the structure of the prior art in which the reverse input gear 517 is disposed closer to the driving source 502 side than the input gear 511 for first gear as that illustrated in FIG. 3, the part in the input shaft 10 that is closer to the driving source 2 side than the input gear 11 for first gear can be shortened, and the size between the gear train G1 for first gear and the driving source 2 in the axial direction can be decreased.

In the transmission 500 of the prior art as that illustrated in FIG. 3, a reverse output gear 527 and a synchro sleeve 541 of the synchronizer 540 for first gear and second gear are integrated, and hence the synchronizer 540 is upsized in the axial direction. Meanwhile, the reverse output gear 27 of the present invention is provided so as to be independent of the synchronizer 40 for first gear and second gear, and hence the synchronizer 40 for first gear and second gear can be formed in a compact manner in the axial direction. Therefore, the gear train G2 for second gear can be disposed near the gear train G1 for first gear in the axial direction. Therefore, on the input shaft 10, the interval between the input gear 11 for first gear and the input gear 12 for second gear in the axial direction can be shortened.

In the structure of the prior art illustrated in FIG. 3, the reverse output gear 527 and the synchro sleeve 541 of the synchronizer 540 for first gear and second gear are integrated on the output shaft 520, and hence a wide dead space S1 is formed between the input gear 511 for first gear and the input gear 512 for second gear on the input shaft 510 in the range in which the synchro sleeve 541 of the synchronizer 540 for first gear and second gear slides with the reverse output gear 527 in the axial direction because a gear, a synchronizer, and the like that may interfere with the reverse output gear 527 cannot be disposed.

Meanwhile, the reverse output gear 27 in this embodiment is provided so as to be independent of the synchronizer 40 for first gear and second gear, and hence does not slide in the axial direction. Therefore, as described above, the reverse input gear 17 can be disposed in a region in the axial direction between the input gear 11 for first gear and the input gear 12 for second gear that overlaps with the synchronizer 40 for first gear and second gear on the output shaft 20. Therefore, in the arrangement of the reverse input gear 17, the dead space S1 between the input gear 511 for first gear and the input gear 512 for second gear in Patent Document 1 can be effectively used.

Therefore, the extension of the input shaft 10 to the side opposite to the driving source 2 is suppressed although the reverse input gear 17 is disposed closer to the side opposite to the driving source 2 as compared to the prior art illustrated in FIG. 3. Therefore, the entire input shaft 10 can be effectively shortened.

As described above, according to this embodiment, by constructing a completely new layout that is different from the prior art, the input shaft 10 can be effectively shortened, and the components of the gear train G1 for first gear, the gear train G2 for second gear, and the gear train GR for reverse gear can be disposed in a compact manner in the axial direction as a whole without interfering with each other. Thus, the vehicle transmission 1 can be formed in a compact manner in the axial direction as a whole. As a result, the ease of mounting the transmission 1 onto a vehicle can be effectively increased.

In this embodiment, the reverse output gear 27 is fixedly provided on the output shaft 20 in a state of being independent of the synchro sleeve 541, and hence the reverse output gear 27 and the second reverse idle gear 32 that meshes therewith may be formed by helical gears. As a result, the noise performance can be improved as compared to a case where there is no other choice but to form the gears 527 and 532 with spur gears as in the prior-art structure illustrated in FIG. 3.

The powertrain in this embodiment is a so-called transversely mounted type in which the input shaft 10 and the output shaft 20 are disposed so as to extend in the vehicle body width direction, and hence the shortening of the full length of the transmission 1 in the axial direction is requested in a stronger manner under strict mounting conditions in the vehicle body width direction. In addition, the powertrain of this embodiment is a powertrain of a so-called hybrid vehicle including the engine 3 and the motor 4 as the driving source 2, and hence a stricter layout condition is forced. In regard to this point, by devising the configuration of the gear trains of the transmission 1 and the arrangement of the final drive gear 28 as described above, the ease of mounting the engine 3, the motor 4, and the transmission 1 is effectively improved in the space in the engine compartment that is limited in the vehicle body width direction.

### [Embodiment 2]

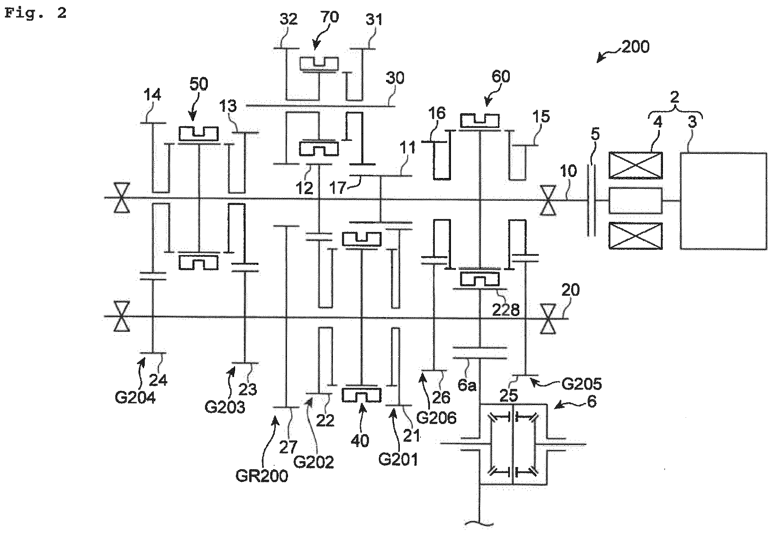

Next, with reference to FIG. 2, a vehicle transmission according to Embodiment 2 is described. Note that, in Embodiment 2, configurations similar to those in Embodiment 1 are denoted by the same reference characters in FIG. 2, and the description thereof is omitted.

As illustrated in FIG. 2, as with Embodiment 1, a transmission 200 of Embodiment 2 includes the input shaft 10, the output shaft 20, and the reverse idle shaft 30 that are disposed in parallel with each other, and a plurality of gear trains G201 to G206 for forward gears and a gear train GR200 for reverse gear are provided between the input shaft 10 and the output shaft 20.

A synchronizer 40 for first gear and second gear is disposed between the gear train G201 for first gear and the gear train G202 for second gear on the output shaft 20. On the input shaft 10, the synchronizer 50 for third gear and fourth gear is disposed between the gear train G203 for third gear and the gear train G204 for fourth gear, and the synchronizer 60 for fifth gear and sixth gear is disposed between gear train G205 for fifth gear and the gear train G206 for sixth gear.

On the reverse idle shaft 30, the first reverse idle gear 31 and the second reverse idle gear 32 are loosely fitted, and the synchronizer 70 for reverse gear is disposed between both of the reverse idle gears 31 and 32.

In Embodiment 2, the arrangement of a final drive gear 228, which transmits power to the differential gear 6 and is provided on the output shaft 20, the gear train G201 for first gear, the gear train G202 for second gear, the gear train G205 for fifth gear, the gear train G206 for sixth gear, and the gear train GR200 for reverse gear is different from Embodiment 1.

Specifically, the plurality of gear trains G201 to G206 and GR200 between the input shaft 10 and the output shaft 20 are disposed so as to line up in the order of the gear train G205 for fifth gear, the gear train G206 for sixth gear, the gear train G201 for first gear, the gear train G202 for second gear, the gear train GR200 for reverse gear, the gear train G203 for third gear, and the gear train G204 for fourth gear in the axial direction from the driving source 2 side. As with Embodiment 1, input gears 11 to 16 and output gears 21 to 26 of the gear trains are disposed in corresponding positions in the axial direction.

The final drive gear 228 on the output shaft 20 is disposed in a position in the axial direction that overlaps with the synchronizer 60 for fifth gear and sixth gear on the input shaft 10. In other words, the final drive gear 228 is disposed between the gear train G205 for fifth gear and the gear train G206 for sixth gear together with the synchronizer 60 for fifth gear and sixth gear. More specifically, the final drive gear 228 is disposed so as to be adjacent to the output gear 25 for fifth gear and the output gear 26 for sixth gear between those gears 25 and 26 on the output shaft 20.

Also in Embodiment 2, the reverse input gear 17 is disposed so as to be adjacent to the side, which is opposite to the driving source 2, of the input gear 11 for first gear on the input shaft 10 in a region in the axial direction that overlaps with the synchronizer 40 for first gear and second gear. The reverse output gear 27 is provided so as to be independent of a synchro sleeve 41 of the synchronizer 40 for first gear and second gear, and is fixedly provided on the output shaft 20 in a position adjacent to the side, which is opposite to the driving source 2, of the output gear 22 for second gear.

Therefore, as with Embodiment 1, the components of the gear train G201 for first gear, the gear train G202 for second gear, and the gear train GR200 for reverse gear are disposed in a compact manner in the axial direction. As a result, in particular, the shortening of the input shaft 10 is effectively achieved.

Also, according to Embodiment 2, as described above, the final drive gear 228 on the output shaft 20 is disposed in a position in the axial direction that corresponds to the synchronizer 60 for fifth gear and sixth gear on the input shaft 10. Therefore, the size of the output shaft 20 in the axial direction can be shortened as compared to a case where the final drive gear 528 is disposed in a position shifted from all of the gear trains and the synchronizeres in the axial direction as in the prior art illustrated in FIG. 3.

Specifically, in the transmission 500 of the prior art as that illustrated in FIG. 3, in the region in the axial direction in which a synchronizer 560 for fifth gear and sixth gear is disposed, a gear and the like do not exist on the output shaft 520 and an empty space S2 is formed.

Meanwhile, in this embodiment, the gear train G205 for fifth gear, the gear train G206 for sixth gear, and the synchronizer 60 for fifth gear and sixth gear are disposed closer to the driving source 2 side than the other gear trains G1 to G4, and the final drive gear 228 is disposed in the empty space S2 (see FIG. 3) on the output shaft 20 that corresponds to the synchronizer 60 for fifth gear and sixth gear.

As a result, the shaft length of the output shaft 20 can be shortened without causing the structure of transmission 200 to become complicated, and hence the layout efficiency of transmission 200 can be improved. Therefore, in addition to the shortening of the length of the input shaft 10 in the axial direction of Embodiment 1, the length of the output shaft 20 in the axial direction can be shortened.

In addition, in this embodiment, the final drive gear 228 is disposed closer to the side opposite to the driving source 2 than the gear train G205 closest to the driving source 2 side, and hence the part of the output shaft 20 on the driving source 2 side can be especially shortened. Accordingly, the part of the input shaft 10 on the driving source side can also be effectively shortened. Therefore, the size of the transmission 200 in the axial direction can be shortened in a more effective manner. As a result, the layout property of the transmission 200 is improved more, and a configuration in which the gear train G205 closest to the driving source 2 side is disposed closer to the driving source 2 as compared to the prior art and the like is easily realized, for example.

The final drive gear 228 on the output shaft 20 is disposed so as to overlap with the synchronizer 60 for fifth gear and sixth gear that corresponds to the sixth gear that is the gear train for fastest stage in the axial direction. The torque necessary for the synchronization tends to decrease as the stage becomes a faster stage, for example, and hence the friction surface does not need to be large for the synchronizer 60 for fifth gear and sixth gear, and the synchronizer 60 for fifth gear and sixth gear has a smaller diameter as compared to the other synchronizers 40 and 50. Therefore, the interference between the synchronizer 60 for fifth gear and sixth gear and the final drive gear 228 in the radial direction can be easily avoided.

The present invention has been described above by way of the abovementioned embodiments, but the present invention is not limited to the abovementioned embodiments.

For example, in the abovementioned embodiments, the reverse input gear and the input gear for first gear are integrally formed, but the reverse input gear and the input gear for first gear only need to be disposed so as to be adjacent to each other, and may be formed with separate bodies.

For example, in the abovementioned embodiments, the synchronizer 70 for reverse gear is disposed between the first reverse idle gear 31 and the second reverse idle gear 32 on the reverse idle shaft 30 as a connection/disconnection mechanism, but a connection/disconnection mechanism such as a dog clutch may be used instead of the synchronizer 70 for reverse gear.

For example, in the abovementioned embodiments, a so-called hybrid vehicle including the motor and the engine in the driving source is formed, but the driving source may also include only one of the motor and the engine.

For example, the vehicle including the powertrain of the abovementioned embodiments is formed by a so-called series hybrid vehicle including the clutch apparatus 5 between the driving source 2 and the transmission 1, but a so-called parallel hybrid vehicle including a second clutch apparatus between the motor and the engine in addition the clutch apparatus 5 may be used.

### [Industrial Applicability].

As described above, according to the present invention, by newly constructing the arrangement of the components of the gear trains in the vehicle transmission, the vehicle transmission can be downsized in the axial direction. Therefore, there is a possibility of the vehicle transmission being suitably used in the field of the manufacturing industry of the type of transmission as above.

### [Explanation of Symbols]

1, 200 Transmission (vehicle transmission)
1, 2 Powertrain
2 Driving source
3 Engine
4 Motor
6 Differential gear
10 Input shaft
11 Input gear for first gear
11 Driving-source-side input gear
12 Input gear for second gear
16 Input gear for sixth gear (rotatably fitted gear)
17 Reverse input gear
20 Output shaft
21 Output gear for first gear
22 Output gear for second gear
22 Non-driving-source-side output gear
26 Output gear for sixth gear (fixed gear)
27 Reverse output gear
30 Reverse idle shaft
31 First reverse idle gear
32 Second reverse idle gear
40 Synchronizer for first gear and second gear
60 Synchronizer for fifth gear and sixth gear (predetermined synchronizer)
70 Synchronizer for reverse gear (connection/disconnection mechanism)
28, 228 Final drive gear
G1 to G6, G201 to G206 Plurality of gear trains for forward gears
G1, G201 Gear train for first gear
G2, G202 Gear train for second gear
G6, G206 Predetermined gear train
GR, GR200 Gear train for reverse gear

## Claims

1. A vehicle transmission (1; 200), comprising:
an input shaft (10) into which a driving force from a driving source (2) is input;
an output shaft (20) disposed in parallel with the input shaft (10);
a plurality of gear trains (G1 to G6; G201 to G206) for forward gears provided between the input shaft (10) and the output shaft (20);
a reverse idle shaft (30) disposed in parallel with the input shaft (10) and the output shaft (20); and
a reverse gear train (GR; GR200) for reverse gear provided so as to span across the input shaft (10), the output shaft (20), and the reverse idle shaft (30),
wherein:
the plurality of gear trains (G1 to G6; G201 to G206;) includes a gear train (G1; G201) for first gear and a gear train (G2; G202) for second gear;
the gear train (G1; G201) for first gear includes an input gear (11) for first gear fixed to the input shaft (10), and an output gear (21) for first gear that is rotatably fitted on the output shaft (20) so as to mesh with the input gear (11) for first gear;
the gear train (G2; G202) for second gear includes an input gear (12) for second gear fixed to the input shaft (10), and an output gear (22) for second gear that is rotatably fitted on the output shaft (20) so as to mesh with the input gear (12) for second gear;
a synchronizer (40) for first gear and second gear configured to selectively fix either one of the output gear (21) for first gear and the output gear (22) for second gear to the output shaft (20) is provided between the output gear (21) for first gear and the output gear (22) for second gear on the output shaft (20);
the reverse gear train (GR; GR200) includes:
a reverse input gear (17) provided on the input shaft (10);
a first reverse idle gear (31) that is rotatably fitted on the reverse idle shaft (30) and configured to mesh with the reverse input gear (17);
a second reverse idle gear (32) rotatably fitted on the reverse idle shaft (30) and disposed so as to be separated from the first reverse idle gear (31) with a predetermined gap in a axial direction; and
a reverse output gear (27) that is provided on the output shaft (20) and configured to mesh with the second reverse idle gear (32);
a connection/disconnection mechanism (70) configured to form and/or release connection between the first reverse idle gear (31) and the second reverse idle gear (32) is provided in the predetermined gap on the reverse idle shaft (30);
an input gear (11) closer to a driving source (2) among the input gear (11) for first gear and the input gear (12) for second gear on the input shaft (10) is disposed between the reverse input gear (17) and the driving source (2) and adjacent to the reverse input gear (17); and
an output gear (22) positioned farther from the driving source (2) among the output gear (21) for first gear and the output gear (22) for second gear on the output shaft (20) is disposed between the reverse output gear (27) and the driving source (2) and adjacent to the reverse output gear (27).

2. The vehicle transmission (1; 200) of claim 1, wherein the connection/disconnection mechanism (70) is a synchronizer configured to synchronize rotation of the first reverse idle gear (31) and rotation of the second reverse idle gear (32).

3. The vehicle transmission (1; 200) of claim 1 or 2, wherein the input shaft (10) and the output shaft (20) extend in a vehicle body width direction.

4. The vehicle transmission (200) of any one of the preceding claims, wherein:
the output shaft (20) includes a final drive gear (228) configured to transmit power to a differential gear (6) connected to a driving wheel;
a predetermined gear train (G205, G206) that is different from the gear train (G201) for first gear and the gear train (G202) for second gear among the plurality of gear trains (G201 to G206) includes a fixed gear (25, 26) that is fixed to the output shaft (20), and a fitted gear (15, 16) that is rotatably fitted on the input shaft (10);
the fitted gear (15, 16) of the predetermined gear train (G205, G206) is provided on the input shaft (10) in a fixable manner via a predetermined synchronizer (60) provided so as to be adjacent to the fitted gear (15, 16) on the input shaft (10);
the fixed gear (25, 26) of the predetermined gear train (G205, G206) is disposed in a position adjacent to the final drive gear (228) on the output shaft (20); and
the final drive gear (228) is disposed in a region in the axial direction that overlaps with the predetermined synchronizer (60) for the predetermined gear train (G205, G206).

5. The vehicle transmission (1; 200) of any one of the preceding claims, wherein the second reverse idle gear (32) and the reverse output gear (27) are formed by a set of helical gears configured to mesh with each other.

6. The vehicle transmission (1; 200) of any one of the preceding claims, wherein the reverse gear train (GR; GR200) is disposed between the gear train (G1; G201) for first gear and a gear train (G3 to G6; G203, G204) other than the gear train (G2; G202) for second gear in the axial direction.

7. The vehicle transmission (1; 200) of any one of the preceding claims, wherein the reverse gear train (GR; GR200) is disposed between the gear train (G1; G201) for first gear and a gear train (G3; G203) for third gear in the axial direction.

8. The vehicle transmission (1; 200) of any one of the preceding claims, wherein the reverse gear train (GR; GR200) is disposed between the gear train (G1; G201) for first gear and a gear train (G4; G204) for fourth gear in the axial direction.

9. The vehicle transmission (1; 200) of any one of the preceding claims, wherein the reverse gear train (GR; GR200) is disposed so as to overlap with the gear train (G2; G202) for second gear in the axial direction.

10. The vehicle transmission (1; 200) of any one of the preceding claims, wherein the reverse output gear (27) is apart from and the synchronizer (40) for first gear and second gear in the axial direction.

11. The vehicle transmission (1; 200) of any one of the preceding claims, wherein the vehicle transmission (1; 200) is a six-speed transmission.

12. The vehicle transmission (1; 200) of any one of the preceding claims, wherein the vehicle transmission (1; 200) is a manual transmission.

13. A powertrain (1, 2; 200), comprising:
the vehicle transmission (1; 200) of any one of the preceding claims; and
the driving source (2) including an engine (3) and a motor (4) disposed on a same axis line as the input shaft (10) .

14. The powertrain of claim 13, further comprising a differential gear (6).

15. A vehicle comprising:
the powertrain (1, 2; 200) according to claim 13 or 14; and
a driving wheel.
